(19) Europäisches Patentamt
European Patent Office
Office européen des brevets

(11) Veröffentlichungsnummer: **0 196 407 B1**

(12) # EUROPÄISCHE PATENTSCHRIFT

(45) Veröffentlichungstag der Patentschrift: **02.01.91**

(51) Int. Cl.[5]: **C 08 J 5/12**, C 08 L 71/12, C 08 L 21/00

(21) Anmeldenummer: **86100662.5**

(22) Anmeldetag: **20.01.86**

(54) **Verfahren zur Herstellung eines festen Verbundes zwischen Formmassen auf Basis von Polyphenylenethern einerseits und Doppelbindungen enthaltenden, mit Schwefel vulkanisierbaren Kautschuken andererseits.**

(30) Priorität: **04.03.85 DE 3507506**
**18.10.85 DE 3537154**

(43) Veröffentlichungstag der Anmeldung:
**08.10.86 Patentblatt 86/41**

(45) Bekanntmachung des Hinweises auf die Patenterteilung:
**02.01.91 Patentblatt 91/01**

(84) Benannte Vertragsstaaten:
**AT BE CH DE FR GB IT LI NL SE**

(56) Entgegenhaltungen:
**DE-A-3 138 401**

**CHEMICAL ABSTRACTS, Band 100, Nr. 6, 6. Februar 1984, Seite 46, Zusammenfassung Nr. 35503b, Columbus, Ohio, US; & JP-A-58 118 830**
**JOURNAL OF APPLIED POLYMER SCIENCE, Band 23, 1979, Seiten 1863-1866, John Wiley & Sons, Inc., New York, US; M.L. RUNGE et al.: "Adhesion of elastomers to rigid substrates - three substrates with unexpectedly high adhesion"**

(73) Patentinhaber: **HÜLS AKTIENGESELLSCHAFT**
**Patentabteilung / PB 15 - Postfach 13 20**
**D-4370 Marl 1 (DE)**

(72) Erfinder: **Jadamus, Hans, Dr.**
**Hervester Str. 8**
**D-4370 Marl (DE)**
Erfinder: **Richter, Klaus-Peter, Dr.**
**Dammstr. 18**
**D-4370 Marl (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 196 407 B1

Courier Press, Leamington Spa, England.

**Beschreibung**

Die Erfindung betrifft ein Verfahren zur Herstellung eines festen Verbundes zwischen thermoplastischen Formstoffen auf Basis von Polyphenylenethern (im folgenden auch PPE-Werkstoffe genannt) einerseits und Doppelbindungen enthaltenden, mit Schwefel vulkanisierbaren Kautschuken andererseits sowie die nach diesem Verfahren erhaltenen Gegenstände.

Häufig kann ein einziger Werkstoff nicht alle Eigenschaften beitragen, die von einem Gegenstand verlangt werden. Solche unvereinbaren Eigenschaftskombinationen sind z.B. gleichzeitig hohe Festigkeit und Gummielastizität oder hohe Härte und Steifheit auf einer und Rutschfestigkeit auf der anderen Seite.

Um Bauteile mit Eigenschaften auszurüsten, die ein einziger Werkstoff nicht beitragen kann, setzt man sie aus Teilen verschiedener Werkstoffe zusammen. Für die Funktionstüchtigkeit derartiger Gegenstände ist häufig eine feste Haftung zwischen den Teilen aus den verschiedenen Werkstoffen eine notwendige Veraussetzung.

Aus Thermoplasten und Gummi zusammengesetzte Gegenstände werden üblicherweise durch mechanische Befestigung, Kleben oder Covulkanisation unter Verwendung besonderer Covulkanisationshilfsmittel verbunden.

Mit mechanischen Befestigungen ist nur ein für geringe Ansprüche ausreichender Kraftschluß zu erzielen.

Verklebungen sind in größeren Serien nur aufwendig herstellbar. Der Einsatz eines Klebemittels führt vielfach zu zusätzlichen Materialproblemen.

Das an sich beste Verfahren besteht darin, den steifen Formstoff und die Kautschukmasse zu covulkanisieren. Nach dem derzeitigen Kenntnisstand erfordert dies üblicherweise eine Vorbehandlung der Oberfläche des steifen Formstoffs und/oder eine besondere Ausrüstung der Kautschukmasse.

Eine Möglichkeit der Oberflächenbehandlung des Thermoplasten (vgl. L. H. Nitzsche, Kautschuk + Gummi, Kunststoff *36,* 572 bis 576 (1983) besteht z.B. darin, ihn mit einer wäßrigen Lösung aus Vinylpyridin-Latex, Resorcin und Formaldehyd zu bestreichen (vgl. Keilriemen, eine Monographie, herausgegeben von der Arntz-Optibelt-Gruppe Höxter, Verlag Ernst Heyer, Essen, S. 83 (1972). Nach einem anderen Verfahren behandelt man die Thermoplast-oberfläche mit einer benzinischen Lösung von Isocyanaten (Bayer-Taschenbuch für die Gummi-Industrie, 1963, S. 254). Man kann aber auch die Kautschukmasse mit haftvermittelnden Zusätzen ausrüsten. Geeignet sind z.B. Kombinationen aus Resorcin, Formaldehyd-Spendern, Kieselsäure, Zinkoxid und Fettsäuren (W. Kleemann, Mischungen für die Elastverarbeitung, Leipzig, 1982, S. 300).

Es ist aber auch bekannt, daß SBR- und EPR-Kautschuke sowie Polybutadiene nach längerer thermischer Behandlung eine unerwartet hohe Adhäsion an bestimmten Kunststoffen zeigen. Diese Kunststoffe, die sich durch die wiederkehrende Einheit

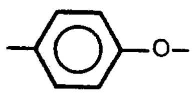

auszeichnen, umfassen Poly(2,6-dimethyl-1,4-phenylen-ether), Polysulfone und Polycarbonate. Bei Polystyrolen, die diese Struktureinheit nicht aufweisen, ist die Adhäsionskraft mehr als 6mal kleiner (P. Dreyfuss, M. L. Runge, J. Appl. Pol. Sci. *23,* 1863 bis 1866). Die Autoren behaupten, daß diese Methode in vielen Fällen einen ausgezeichneten Verbund zwischen der Elastomer- und der Kunststoffschicht liefere, selbst wenn oder gerade wenn das Elastomere, wie im Falle des EPR-Kautschuks, keine Doppelbindungen enthält.

Tatsächlich weist die Methode erhebliche Nachteile auf:

Die erzielten Haftfestigkeiten sind für technische Einsatzzwecke derartiger Verbundsysteme noch nicht als ausreichend anzusehen.

Die reinen Polyphenylenether spielen wegen ihrer schlechten Verarbeitbarkeit und ihrer unzureichenden Kerbschlagzähigkeit nur eine wirtschaftlich untergeordnete Rolle. Alle PPE-haltigen Polymermischungen enthalten Zusätze von Polymeren, deren Verbundeigenschaften deutlich schlechter sind. Für die wirtschaft lich interessanten Polymermischungen mit einem Anteil von mehr als 10% Styrolpolymerisaten sollte die beschriebene Methode daher ungeeignet sein.

Für technische Einsatzzwecke verwendet man füllstoffhaltige Kautschuke, deren Haftungseigenschaften im Vergleich zu den untersuchten füllstofffreien Systemen schlechter sein sollten.

Der Verbund ist gegenüber Kohlenwasserstoffen nicht bestandig.

Von erheblichem Nachteil ist ferner der Umstand, daß die Behandlungszeiten außerordentlich lang sind. Mehrstündige Einwirkungszeiten sind mit einer modernen rationellen Herstellung von Formteilen nicht vereinbar.

Unter diesen Umständen ist es nicht verwunderlich, daß es weder zu einer Weiterentwicklung dieses Verfahrens, noch zu einer industriellen Nutzung gekommen ist.

Schaut man sich das Verfahren trotz dieser Einwände einmal näher an, so stellt man fest, daß es den Autoren darauf ankam, einen physikalischen Verbund zwischen bestimmten Thermoplasten und synthetischen Kautschuken herzustellen. Insbesondere sollte ein kalter Fluß verhindert werden, wie sie schreiben. Ein chemischer Verbund sollte vermieden werden, war doch gefunden worden, daß die

Adhäsionskraft mit zunehmendem Vernetzungsgrad des Kautschuks abnimmt (vgl. A. Ahagon, A. N. Gent, J. Polym. Sci.: Polym. Phys. Ed. *13*, 1285 (1975) Zusammenfassung.

Fährt man die Versuche nach, so stellt man fest, daß die Haftfestigkeitswerte keineswegs so gut sind, wie dies in dem zitierten Artikel dargestellt ist (siehe Vergleichsversuche). In einzelnen Fällen ist die Trennkraft nicht meßbar, da der Kautschuk im Laufe der thermischen Behandlung krümelig geworden ist.

Es kommt hinzu, daß im zitierten Artikel auf Seite 1864 (Tabelle I) in zwei Fällen mit Schwefel vulkanisiert wird. Dabei wird 9 Stunden auf 65°C gehalten. In beiden Fällen wird eine im Vergleich zur peroxidischen Vulkanisation wesentlich schlechtere Adhäsionsarbeit und adhäsives Versagen festgestellt. Dies wird mit der Anwesenheit von Schwefel an der Grenzfläche erklärt. Dem Fachmann wird damit das Vorurteil vermittelt, daß ein Vulkanisationssystem auf Basis von Schwefel für die Herstellung derartiger Verbunde ungeeignet ist.

Ziel der vorliegenden Erfindung war es, ein Verfahren zur Herstellung eines Verbundes zwischen PPE-haltigen, thermoplastischen Formmassen und elastomeren Kautschuken bereitzustellen, das folgende Anforderungen erfüllen sollte:

1. Es sollte nicht nur auf Polyphenylenether, sondern generell auf Polystyrole und Kohlenwasserstoffe enthaltende PPE-Formmassen anwendbar sein.
2. Der Verbund sollte vorzugsweise in wenigen Minuten hergestellt werden können.
3. Die Haftfestigkeiten sollten gegenüber den bekannten Verbundsystemen verbessert werden.
4. Das Verbundsystem sollte gegenüber Kohlenwasserstoffen beständig sein.

Es wurde jetzt gefunden, daß man hervorragende Haltfestigkeitswerte erreicht, wenn man — entgegen der Meinung von Dreyfuss und Runge — einen Verbund zwischen einem PPE-haltigen Werkstoff und bestimmten Doppelbindungen enthaltenden, mit Schwefel vulkanisierbaren Kautschuken herstellt. Dies impliziert, daß man vorzugsweise eine Covulkanisation im Temperaturbereich von 140 bis 200°C innerhalb von 30 s bit 10 min durchführt. Die Massetemperatur der Kautschukmischung liegt vor der Covulkanisation bei 40 bis 80°C und der Anteil der Beschleuniger liegt — bezogen auf 100 Teile Kautschuk — unter 3%. Weitere Einzelheiten des Verfahrens gehen aus den Ansprüchen hervor. Gegenstand der vorliegenden Erfindung sind ferner die nach diesem Verfahren erhaltenen Covulkanisate entsprechend Anspruch 18.

Im folgenden soll zunächst die Zusammensetzung der PPE-haltigen Formmassen mit ihren Komponenten

a) PPE,
b) Polyalkenylene,
c) Styrolpolymerisate,
d) Zusatzstoffe

beschrieben werden, wobei die Mengen durch den Anspruch 1 bzw. in bevorzugten Ausführungsformen durch die Ansprüche 9 und 10 festgelegt sind.

Als Polyphenylenether a) kommen Polymere auf Basis substituierter Phenole der allgemeinen Formel

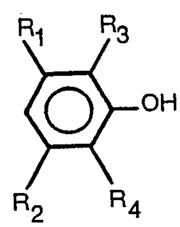

infrage. $R_1$ und $R_2$ bedeuten unabhängig voneinander einen Methylrest oder vorzugsweise Wasserstoff. Entweder steht $R_3$ für Wasserstoff und $R_4$ für einen tertiären Alkylrest mit bis zu 6 C-Atomen, wie z.B. den tertiären Butylrest, oder $R_3$ und $R_4$ haben unabhängig voneinander jeweils die Bedeutung eines n-Alkylrestes mit bis zu 6 C-Atomen. Vorzugsweise wird 2,6-Dimethylphenol verwendet. Selbstverständlich können auch Gemische der hier aufgeführten monomeren Phenole eingesetzt werden. Ganz besonders bevorzugt werden Poly(2,6-dimethyl-1,4-phenylenether) mit einer Grenzviskosität zwischen 0,4 und 0,7 dl/g (gemessen in Chloroform bei 25°C).

Die Polyphenylenether können z.B. in Gegenwart von komplexbildenden Mitteln, wie Kupferbromid und Morpholin, aus 2,6-Dimethylphenol hergestellt werden (vgl. DE—OSS—32 24 692 und 32 24 691). Sie werden üblicherweise als Pulver oder Granulat eingesetzt.

Die Polyalkenylene b) werden durch ringöffnende bzw. ringerweiternde Polymerisation von Cycloalkenen hergestellt (siehe K. J. Ivin, T. Saegusa "Ring-opening Polymerization, Vol. 1, Elsevier Appl. Sci. Publishers, London, insbesondere Seiten 121 bis 183 (1984).

Bevorzugt werden Polyoctenylene (vgl. A. Dräxler, Kautschuk + Gummi, Kunststoff *1981*, Seiten 185 bis 190). Polyoctenylene mit unterschiedlichen Anteilen an cis- und trans-Doppelbindungen sowie unterschiedlichen J-Werten und dementsprechend unterschiedlichen Molekulargewichten sind nach literaturbekannten Methoden erhältlich. Bevorzugt werden Polyoctenylene mit einer Viskositätszahl von 50 bis 350 ml/g, vorzugsweise 80 bis 160 ml/g, bestimmt an einer 0,1%igen Lösung in Toluol. 55 bis 95%, vorzugsweise 75 bis 85%, ihrer Doppelbindung liegen in der trans-Form vor.

Formmassen auf Basis von Polyphenylenethern und Polyoctenylenen werden in den europäischen Patentanmeldungen EP—A—181 449 und EP—A—185 860 beschrieben.

Als Komponente c) können Styrolhomopolymerisate und/oder schlagzähe Styrolpolymerisate eingesetzt werden.

Die Styrolhomopolymerisate werden in bekannter Weise aus Styrol durch radikalische Masse- oder Suspensionspolymerisation hergestellt. Ihre Molekularmassen liegen zwischen 150 000 und 300 000 (vgl. Kunststoff-Handbuch, Band V, Polystyrol, Carl Hanser Verlag München, 1969, und Ullmanns Encyklopädie der technischen Chemie, 4. Auflage, Band 19, Verlag Chemie, Weinheim 1980).

Die bevorzugt eingesetzten schlagzähen Styrolpolymerisate werden in bekannter Weise erhalten, indem styrolische Lösungen von Poly-cis-butadien in Masse, in Lösung oder in wäßriger Dispersion polymerisiert werden. Bei dem sogenannten gemischten Verfahren wird die styrolische Kautschuklösung in Masse vorpolymerisiert und in wäßriger Dispersion zu Ende polymerisiert (siehe beispielsweise US—PSS—2 694 692 und 2 862 906).

Die Einstellung der Teilchengröße der Weichphase erfolgt in an sich bekannter Weise in der Stufe der Vorpolymerisation vor der sogenannten Phasenumkehr. Gegebenenfalls kann auch in Gegenwart der bekannten Kettenregler und/oder radikalischer Initiatoren gearbeitet werden. Einzelheiten, wie z.B. der Zusammenhang zwischen der Rührgeschwindigkeit und der Größe und Verteilung der Kautschukteilchen im resultierenden schlagfesten Polymerisat sind dem Fachmann bekannt (siehe z.B. Freeguard Brit. Polym. J. *6,* 203 bis 228, (1974).

Der Durchmesser der Teilchen in der elastomeren Gelphase liegt üblicherweise unter 10 µm, vorzugsweise unter 3,5 µm. Der mittlere Durchmesser (Volumenmittel) liegt im Bereich zwischen 1 und 5 µm. Hierbei sind jedoch die Teilchen nicht berücksichtigt, deren Durchmesser entweder unter 0,5 µm oder über 10 µm liegt.

Die mittlere Teilchengröße (Volumenanteil) wird bestimmt durch Ausmessen und Mitteln der Durchmesser von flächengliechen Kreisen (Äquivalentdurchmesser) der Teilchen aus elektronenmikroskopischen Dünnschicht-Aufnahmen.

Mit den Volumina der Teilchen (3. Potenz des Äquivalentdurchmessers) wird die Verteilungskurve und daraus das Volumenmittel errechnet. Für die Auswertung sollen mindestens 2 000 Teilchen herangezogen werden.

Die PPE-Formmassen enthalten gegebenenfalls weitere Zusatzstoffe d) wie Stabilisatoren, Verarbeitungshilfsmittel, Treibmittel und Metallfasern, Ruß, Graphit und Metallflitter, Titandioxid und Zinksulfid. Der Anteil der Verstärkungsmittel im PPE-Werkstoff kann bis zu 50, der der Flammschutzmittel bis zu 15% und der aller übrigen Zusatzstoffe insgesamt bis zu 5%, jeweils bezogen auf die gesamte Formmasse, betragen.

Als Flammschutzmittel sind besonders aromatische Phosphorverbindungen, wie Triphenylphosphinoxid und Triphenylphosphat, geeignet. Man kann auch ein übliches halogenhaltiges Flammschutzmittel verwenden. Infrage kommen dabei Halogen enthaltende organische Verbindungen, wie sie z.B. in der Monographie von H. Vogel "Flammfestmachen von Kunststoff", Hüthig-Verlag 1966, auf den Seiten 94 und 102 beschrieben werden. Es kann sich dabei aber auch um halogenierte Polymere, wie z.B. halogenierte Polyphenylenether (siehe EP—A—141 055) oder bromierte Oligo- bzw. Polystyrole, handeln. Die Verbindungen sollen mehr als 30 Gewichtsprozent Halogen enthalten.

Im Falle des Einsatzes der halogenhaltigen Flammschutzmittel empfiehlt es sich, einen Synergisten zu verwenden. Geeignet sind Verbindungen des Antimons, Bors und des Zinns. Diese werden im allgemeinen in Mengen von 0,5 bis 10 Gewichtsprozent, bezogen auf die thermoplastischen Massen, eingesetzt.

Geeignete Stabilisatoren umfassen organische Phosphite, wie z.B. Didecylphenylphosphit und Trilaurylphosphit, sterisch gehinderte Phenole sowie Tetramethylpiperidin-, Benzophenon- und Triazolderivate.

Vorzugsweise werden die PPE-Werkstoffe durch Vermischung der Komponenten im geschmolzenen Zustand hergestellt. Man schmilzt zumindest eine Komponente auf und vermischt die erhaltene Schmelze mit den übrigen Komponenten. Eine andere Möglichkeit besteht darin, alle Komponenten gemeinsam aufzuschmelzen und zu vermischen.

Vorzugsweise werden Schmelztemperaturen von 250 bis 350°C, insbesondere von 260 bis 300°C, und Verweilzeiten von 0,3 bis 10 Minuten, insbesondere von 0,5 bis 3 Minuten, angewendet.

Für das Schmelzen und Vermischen eignen sich übliche Geräte zur Behandlung von hochviskosen Schmelzen, sowohl im absatzweisen als auch im kontinuierlichen Betrieb. Besonders geeignet sind Doppelschneckenkneter und Kokneter.

Es ist aber auch möglich, die PPE-Werkstoffe statt durch Compoundieren auf andere Weise, z.B. durch Fällen aus dem Lösungsgemisch der Komponenten, herzustellen. Als gemeinsames Lösemittel eignet sich z.B. Toluol, als Fällungsmittel z.B. Methanol. Das Polymerengemisch kann auch durch Verdampfen des Lösemittels z.B. nach der europäischen Patentanmeldung EP—A—137 977 gewonnen werden.

Als Kautschukkomponente kommen folgende Doppelbindungen enthaltende, mit Schwefel vulkanisierbare Kautschuke in Betracht:

1. Styrol-Butadien-Kautschuke

Es kann sich dabei sowohl um E- als auch um L-SBR-Kautschuke mit einem Styrolanteil zwischen 18 und 40 Gewichtsprozent handeln. Auch ölgestreckte SBR-Kautschuke sind geeignet.

Der Kautschuk kann in Ballenform vorliegen. Für die Verarbeitung ist es jedoch ökonomischer, von einem pulverförmigen, füllstoffhaltigen Kautschuk auszugehen.

E-SBR-Kautschuk wird bekannterweise durch Polymerisation von 15 bis 40 Gewichtsprozent Styrol und entsprechend 85 bis 60% Butadien in Emulsion hergestellt. Ein solcher Kautschuk wird beispielsweise in der Werkzeitschrift BUNA® EM Nr. 601 der Bunawerke Hüls GmbH, Ausgabe September 1982, beschrieben. Seine Mooney-Viskosität $ML_{(1+4)}$, 100°C, liegt zwischen 30 und 120 (vgl. Mooney, Rubber Chem. Techn. *30,* 460 (1957).

Besonders bevorzugt ist ein pulverförmiger, füllstoffhaltiger E-SBR-Kautschuk.

Es gibt eine Reihe unterschiedlicher Verfahren zur Herstellung pulverförmiger, füllstoffhaltiger Kautschuke. Viele Prozesse sind jedoch so langwierig und umständlich, daß sie keine praktische Bedeutung erlangt haben. In jüngster Zeit wurde erstmalig ein Verfahren in die industrielle Praxis überführt, das in der DE—OS—28 22 148 beschrieben ist. Dieses Verfahren zeichnet sich dadurch aus, daß man die Kautschukkomponente in gelöster Form mit einer wäßrigen Füllstoff-Suspension vereinigt, die ein wasserlösliches Aluminiumsalz und Wasserglas enthält. Entscheidend ist, daß nicht nur die wäßrige Füllstoff-Dispersion einen pH-Wert von 3,0 bis 3,7 aufweisen soll, sondern daß man bei der Vereinigung dieser Dispersion mit der Kautschukkomponente soviel Mineralsäure zusetzen soll, daß in der erhaltenen Mischung ebenfalls dieser pH-Bereich eingehalten wird.

Gleichgültig, ob man von Kautschuk in Ballenform oder von füllstoffhaltigem Pulver ausgeht, die covulkanisierbaren Kautschukmischungen enthalten stets Füllstoffe wie Ruß oder Kieselsäure, Verstreckungsmittel wie z.B. Mineralöle, Vulkanisationsmittel wie Schwefel, Vulkanisationsbeschleuniger und Alterungsschutzmittel. Ein besonders geeignetes Verarbeitungshilfsmittel ist Polyoctenylen (A. Dräxler, Kautschuk + Gummi, Kunststoff 1983, S. 1037 bis 1043).

Die zugesetzten Mineralöle können paraffinisch, naphthenische oder aromatisch sein.

2. Butadien-Kautschuke

Geeignet sind BR-Kautschuke unabhängig davon, ob sie mit Li- oder Co-Katalysatoren hergestellt wurden. Auch der Anteil des cis-1,4-Isomeren hat keinen Einfluß auf die Eignung dieses Kautschuktyps. Der Einsatz von Polyoctenylen als Verarbeitungshilfsmittel ist auch hier vorteilhaft.

3. Isopren-Kautschuke

Geeignet sind synthetische IR-Kautschuke, unabhängig davin, ob sie mit Ti- oder Li-Katalysatoren hergestellt wurden. Naturkautschuk ist nur als Mischungskomponente geeignet. Auch 3,4-IR kann verwendet werden. Somit hat der cis-1,4/trans-1,4-bzw. 1,2- und 3,4-Gehalt keinen Einfluß auf die Halftungseigenschaften.

4. Isobuten-Isopren-Kautschuke

Weiterhin sind IIR-Kautschuke unmittelbar geeignet. Halogenierte Varianten bedürfen weiterer Mischungskomponenten.

5. Mischungen folgender Kautschuktypen untereinander:

SBR, BR, IR und IIR.

Diese Mischungen sind vorzugsweise 2- oder 3-komponentig. Mit Mischungen unterschiedlicher Gewichtsanteile SBR- und BR-Kautschuk werden besonders gute Ergebnisse erzielt.

6. Kautschukmischungen, die NR-, CR-, NBR- und/oder CIIR-Kautschuk enthalten

Es handelt sich um Mischungen der Kautschukkomponenten 1 bis 5 mit den aufgeführten Kautschuktypen, wobei der Anteil der letzteren insgesamt bis zu 80 Gewichtsprozent betragen kann.

Die maximalen Anteile der einzelnen aufgeführten Kautschuktypen sind Anspruch 1 zu entnehmen.

Besonders günstig sind NR/SBR- und NR/BR/SBR-Kautschukmischungen, wobei der Anteil des NR-Kautschuks vorzugsweise zwischen 50 und 95 Gewichtsprozent beträgt.

Eine weitere Kautschukmischung enthält CR-, SBR- und NBR-Kautschuk. Der Anteil des CR-Kautschukes kann 40% erreichen, der des NBR-Kautschuks bis 25%, jeweils bezogen auf das Gewicht der Mischung. Ein drittes besonders günstiges Kautschukgemisch enthält bis zu 45 Gewichtsprozent CR-Kautschuk und als weitere Komponente einen SBR-Kautschuk.

Ersetzt man in SBR-, BR-, IR-, IIR-Kautschuken oder deren Mischungen bis zu 25 Gewichtsprozent durch einen NBR-Kautschuk, so gelangt man zu einem weiteren geeigneten Kautschuktyp.

Die Herstellung der aufgeführten Kautschuktypen erfolgt nach literaturbekannten Methoden (vgl. W. Hofmann, Kautschuktechnologie, Gentner-Verlag, Stuttgart, 1980).

Das Verfahren der Covulkanisation

Die Fertigung der aus steifen und gummielastischen Formstoffen zusammengesetzten Formteile kann ein- oder zweistufig erfolgen.

Bei einem einstufigen Verfahren bringt man die beiden Schmelzen in einer Form zur Reaktion und läßt das Formteil erkalten.

Beim zweistufigen Verfahren wird ein Formteil aus dem PPE-Werkstoff, das durch Pressen, Spritzgießen oder Extrudieren hergestellt wurde, mit der ggf. vorgeformten Kautschukmasse beaufschlagt und den Vulkanisationsbedingungen des Kautschuks ausgesetzt. Das Beaufschlagen des steifen Formteils mit dem Kautschuk kann durch Pressen, Spritzgießen oder Extrudieren geschehen, wobei die Auswahl des Kautschuks bezüglich der Masseviskosität sich nach dem gewählten Formgebungsverfahren richten muß.

Beim zweistufigen Spriztgießverfahren geht man ähnlich wie bei der zweistufigen Herstellung von Zweifarbenspritzteilen vor. Als Einlegeteil verwendet man ein Formteil aus dem PPE-Werkstoff. Zylinder und Schnecke der Spritzgießmaschine sind in bekannter Weise für die Kautschukverarbeitung ausgelegt und das Werkzeug auf Vulkanisationstemperatur beheizbar.

Die optimalen Covulkanisationsbedingungen hängen von der gewählten Kautschukmischung, insbesondere ihrem Vulkanisationssystem, und der Formteilgestaltung ab. Bezüglich Einzelheiten wird auf das Buch von W. Hofmann, a.a.O. Seite 255 ff. verwiesen. In diesem Buch sind auch die bevorzugt verwendeten Abmischungen der Dien-Kautschuke mit Stearinsäure, Zinkoxid, Füllstoffen (z.B. Ruß), Weichmacherölen sowie Vulkanisationsbeschleuniger angegeben. Insbesondere verwendet man schwefelhaltige Vulkanisationsbeschleuniger.

Geeignete Massetemperaturen der Kautschukmischung im Zylinder liegen im Bereich zwischen 40 und 80, vorzugsweise zwischen 60 und 75°C.

Geeignete Werkzeugtemperaturen liegen zwischen 140 und 200°C, bevorzugt zwischen 150 und 180°C. Bei Verwendung von PPE-Werkstoffen, die hohe Anteile an Styrolharzen oder die Formbeständigkeit in der Wärme erniedrigende Brandschutzmittel enthalten, wählt man Temperaturen im unteren Teil der angegebenen Bereiche.

Die Vulkanisationszeiten liegen zwischen 30 s und 10 min, vorzugsweise zwischen 90 und 300 s.

Beim Beaufschlagen und Ausvulkanisieren nach dem zweistufigen Extrusionsverfahren wird z.B. ein in der ersten Stufe hergestelltes Profil aus einem PPE-Werkstoff, z.B. ein Rohr, mit der Kautschukmasse ummantelt und gegebenenfalls unter Druck ausvulkanisiert. Ensprechend verfährt man mit Platten, Vliesen, Geweben, Seilen usw.

aus PPE-Werkstoffen.

Beim einstufigen Spritzgießverfahren arbeitet man analog zu dem bekannten Zweikomponentenverfahren zur Herstellung von Spritzteilen mit z.B. einem geschäumten Kern und einer Außenhaut aus einem anderen Werkstoff (K. Mörwald, Plastverarbeiter *28,* (1977), Seiten von 305 bis 310), oder dem Zweikomponentenverfahren mit einem verstärkten Werkstoff für die Kernschicht und einem unverstärkten Werkstoff für die Außenschicht, oder zu dem einstufigen Zweifarbenspritzgießverfahren. In diesem Fall ist eine Spritzgießmaschine für die Thermoplastverarbeitung, die andere für die Kautschukverarbeitung ausgerüstet. Das Werkzeug wird auf die vorgegebene Vulkanisiertemperatur aufgeheizt, die unter der Erstarrungstemperatur des PPE-Werkstoffes liegen sollte.

Aus den covulkanisierbaren Massen lassen sich beispielsweise folgende Gegenstände herstellen:

Brems- und Kupplungsscheiben, gummibeschichtete Walzen; Flansche, Rohr- und Schlauchkupplungen, Armaturenteile; Gehäuse für Pumpen und elektrisch betriebene Werkzeuge, Lampengehäuse; Membranen, Manschetten, Dichtungsrahmen; Teile hyraulisch oder pneumatisch arbeitender Geräte für Steuerungen und Kraftübertragungen; schall- und schwingungsdämpfende, stoß- und strahlungsabsorbierende Bauteile; Federelemente; PPE-verstärkte Gummiprofile: Transportbänder, Anreibsriemen, Fahrzeugreifen; Andruckrollen für Video- und Audio-Band-Geräte; Gleiskettenglieder.

## Beispiele:

1. PPE-Werkstoffe

1.1 Poly(2,6-dimethyl-1,4-phenylenether) mit einem J-Wert von 68 ml/g.

Den Polyphenylenether erhält man durch oxidative Kupplung von 2,6-Dimethylphenol, Abstoppung der Reaktion und anschließende Reaktionsextraktion gemäß DE—OSS—33 13 864 und 33 23 777. Das Lösemittel wird durch Abdampfen entfernt und die Schmelze über einen Entgasungsextruder extrudiert und anschließend granuliert.

1.2 Ein Polymerengemisch, bestehend aus

90 Gewichtsteilen Poly(2,6-dimethyl-1,4-phenylenether) und 10 Gewichtsteilen Polyoctenylen.

Es wird ein Polyoctenylen mit einem J-Wert von 120 ml/g und einem trans-Gehalt von 80% eingesetzt. Ein solches Produkt ist unter dem Namen VESTENAMER® 8012 im Handel erhältlich (Hersteller: HOLS AKTIENGESELLSCHAFT, D-4370 Marl 1). Weitere Kenndaten dieses Produktes sind der Zeitschrift "Kautschuk, Gummi, Kunststoffe" *1981,* Seiten 185 bis 190, sowie dem hüls-Merkblatt Nr. 2247 "VESTENAMER 8012" zu entnehmen. Das Polyoctenylen kann beispielsweise auch nach K. J. Ivin "Olefin Metathesis", Academic Press, Seiten 236 ff., 1983, und den dort angegebenen weiteren Literaturstellen hergestellt werden.

Analog zu Beispiel 1.1 wird ein Polyphenylenether mit einem J-Wert von 45 ml/g hergestellt und mit dem Polyoctenylen in Toluol vereinigt. Die Gewinnung des PPE-Werkstoffs erfolgt wie in Beispiel 1.1 beschrieben.

1.3 Ein Polymerengemisch bestehend aus

78 Gewichtsteilen Poly(2,6-dimethyl-1,4-phenylenether) und 22 Gewichtsteilen schlagzäh modifiziertem Polystyrol.

Als schlagfestes Styrolpolymerisat wird VESTYRON® 616 der Fa. HOLS AKTIENGESELLSCHAFT, D-4370 Marl, eingesetzt. Die Kenndaten dieses Produktes sind der Broschüre "Kunststoffe von hüls, VESTYRON", Ausgabe September 1979, zu entnehmen.

Den Polyphenylenether mit einem J-Wert von 50 ml/g erhält man durch oxidative Kupplung von 2,6-Dimethylphenol, Abstoppung der Reaktion und anschließende Reaktionsextraktion gemäß EP—A—122 394 und EP—A—137 139.

1.4 ein Polymerengemisch bestehend aus

60 Gewichtsteilen Poly(2,6-dimethyl-1,4-phenylenether), 30 Gewichtsteilen schlagfest modifiziertem Polystyrol, 10 Gewichtsteilen Polyoctenylen.

Man verwendet VESTYRON® 616 als schlagfest modifiziertes Polystyrol und VESTENAMER® 8012 als Polyoctenylen und verfährt wie im Beispiel 1.3.

1.5 Ein Polymerengemisch bestehend aus

60 Gewichtsteilen Poly(2,6-dimethyl-1,4-phenylenether), 30 Gewichtsteilen Styrolhomopolymerisat und 10 Gewichtsteilen Polyoctenylen.

Als Styrolhomopolymerisat wird VESTYRON® 114, ein Produkt der Fa. HÜLS AKTIENGESELLSCHAFT, D-4370 Marl, eingesetzt. Die Kenndaten dieses Produktes sind der Broschüre "Kunststoffe von hüls, VESTYRON", Ausgabe September 1983, zu entnehmen.

Im übrigen verfährt man wie im Beispiel 1.4

1.6 Ein Polymerengemisch aus

52 Gewichtsteilen Poly(2,6-dimethyl-1,4-phenylenether) und 48 Gewichtsteilen schlagzäh modifiziertem Polystyrol.

Man verfährt analog zu Beispiel 1.3.

2. Kautschuke

2.1 Ein rußgefüllter, weichmacherhaltiger E-SBR-Pulverkautschuk wird durch Vermischung folgender Bestandteile hergestellt:

| Gewichtsteile | Stoff | |
|---|---|---|
| 160 | Kautschukpulver, bestehend aus 100 Teilen E-SBR-Kautschuk (Styrolgehalt 23 Gewichtsprozent) und 60 Teilen Ruß (Fiormenschrift der HOLS AKTIENGESELLSCHAFT, Nr. 5214 vom Oktober 1983 "Füllstoffhaltiges Kautschukpulver BUNA EM") | |
| 1 | Stearinsäure | |
| 4 | Zinkoxid | |
| 1 | N-Isopropyl-N'-phenyl-p-phenylendiamin | |
| 1 | N-(1,3-Dimethylbutyl)-N'-phenyl-p-phenylendiamin | |
| 2,5 | eines handelsüblichen Alterungsschutzmittels gegen Licht und Ozon (Antilux® 111). Es handelt sich um ein paraffinisches Wachs mit breiter Molekulargewichtsverteilung und hohem Molekulargewichtsmittel. Hersteller: Fa. Rheine-Chemie, D-6800 Mannheim). | |
| 1,8 | Schwefel | Vulkanisations-system S1 |
| 1,3 | N-Cyclohexyl-1-benzothiazolsulfenamid | |
| 0,8 | Tetramethylthiuramdisulfid | |
| 0,5 | Diphenylguanidin | |
| 0,3 | Zinkdiethyldithiocarbamat | |
| 40 | eines handelsüblichen aromatischen Mineralölweichmachers (z.B. el 3002 extract der Fa. Gulf) | |

Der Pulverbatch wird direkt in die Spritzgießmaschine eingesetzt.

2.2 Ein rußgefüllter, weichmacherhaltiger E-SBR-Kautschuk als Walzfell

Einen Teil der Mischung 2.1 walzt man während 5 min bei 50°C zu einem 2 mm dicken Fell aus, das man in 25 mm breite Fütterstreifen zerschneidet und in der Spritzmaschine einsetzt.

2.3 BUNA® EM 1502

Es handelt sich um einen E-SBR-Kautschuk, wie er in der Broschüre der HOLD AKTIENGESELLSCHAFT, D-4370 Marl, mit dem Titel "BUNA EM" von September 1982, 4, Auflage, beschrieben ist. Dieser Kautschuktyp entspricht dem von Runge und Dreyfuss angegebenen Typ AMERIPOL® 1502 der Fa. Goodrich-Gulf Chemicals Incorporated. Das SBR-Copolymerisat enthält 23 Gewichtsprozent Styrol. Entsprechend den Angaben dieser Autoren wird folgende Zusammensetzung für eine rußfreie Mischung zusammengestellt:

| Gewichtsteile | Stoff | |
|---|---|---|
| 100 | BUNA® EM 1502 | |
| 1 | Stearinsäure | |
| 4 | Zinkoxid | |
| 5,7 | Lauroylperoxid | P2 |

Diese und alle folgenden Mischungen wurden auf einem Laborwalzwerk 300 0 × 450 mm hergestellt. Die Walztemperatur betrug stets 50°C, die Mischdauer 30 Minuten. Für die Festlegung der Vulkanisationszeit wurde eine Vulkameterkurve aufgenommen.

2.4 BUNA® CB 35 NF

Es handelt sich um ein Polybutadien, wie es in der Broschüre "BUNA® CB; Butadien-Kautschuk für die Gummiindustrie" (Bestellnummer KA 30 996, Ausgabe 4/83) der Bunawerke Hüls GmbH und der Bayer AG beschrieben ist.

Dieser Kautschuktyp entspricht dem von Runge und Dreyfuss angegebenen Typ Diene 35 NFA der Firestone Tire and Rubber Comp. (Lithium-Typ, cis-1,4-Gehalt 38%).

Entsprechend den Angaben dieser Autoren wird folgende Zusammensetzung für eine rüßfreie Mischung zusammengestellt:

| Gewichtsteile | Stoff | |
|---|---|---|
| 100 | BUNA® CB 35 NF | |
| 0,5 | Stearinsäure | |
| 3 | Zinkoxid | |
| 1,5 | Schwefel | Vulkanisation-system S2 |
| 12 | Zink-N-diethyldithiocarbamat | |
| 1,5 | Dibenzothiazyldisulfid | |
| oder | | |
| 2,4 | Dicumylperoxid | P1 |
| oder | | |
| 9,1 | Lauroylperoxid | P2 |

2.5 Die zu 2.4 analoge rußhaltige Mischung enthält zuzätzlich:

| Gewichtsteile | Stoff |
|---|---|
| 60 | Ruß CORAX® N 330 (Hersteller: Fa. Degussa, D-6000 Frankfurt |
| 35 | paraffinisch-naphthenisches Öl. Ein solches Öl wird unter dem Namen TUDALEN® B 80 von der Fa. Dahleke, D-2070 Ahrensburg hergestellt (vgl. auch W. Hofmann, a.a.O. S. 354 ff.). |

Zur Festlegung der Vulkanisationszeit wurde eine Vulkameterkurve aufgenommen.

2.6 Mischung auf der Basis eines hochstyrolhaltigen E-SBR-Kautschukes

Der Kautschuk wird in der obengenannten Broschüre beschrieben und enthält 40% Styrol. Die Mischung setzt sich wie folgt zusammen:

| Gewichtsteile | Stoff | |
|---|---|---|
| 100 | BUNA® EM 1516 | |
| 5 | Zinkoxid | |
| 2 | Stearinsäure | |
| 50 | Ruß CORAX® N330 | |
| 5 | aromatisches Öl (Gulf el 3002 extract) | Vulkanisa-tions-system S2 |
| 0,5 | Schwefel | |
| 1,3 | Benzothiazyl-2-cyclohexyl-sulfenamid = CBS (Bayer Vulkazit CZ) | |
| 1,0 | Tetramethylthiuramdisulfid = TMTD (Bayer Vulkazit-Thiuram) | |

2.7 Mischung auf der Basis eines L-SBR-Kautschukes

Der L-SBR-Kautschuk wird in der Druckschrift 4242 Ausgabe 11/84 der HOLS AKTIENGESELLSCHAFT beschrieben und enthält 25% Styrol. L-SBR-Kautschuk wird durch Copolymerisation von 15 bis 40 Gewichtsprozent Styrol und entsprechend 85 bis 60% Butadien in Hexan hergestellt. Seine Mooney-Viskosität $ML_{(1+4)}$ 100°C liegt im Bereich von 35 bis 45. Die Mischung unterscheidet sich von der Mischung 2.6 nur durch den Einsatz von 100 Gewichtsteilen BUNA® SL 705.

2.8 Mischung auf der Basis eines niedrigstyrolhaltigen L-SBR-Kautschukes

Die Mischung unterscheidet sich von der Mischung 2.7 durch den Einsatz von 100 Gewichtsteilen BUNA® SL 704, einem Kautschuk mit einem Styrolgehalt von 18%.

2.9 Mischung auf der Basis eines hochstyrolhaltigen, ölgestreckten E-SBR-Kautshukes

Die Mischung unterscheidet sich von 2.6 durch den Einsatz von 137,5 Gewichtsteilen BUNA® EM 1721, einem Kautschuk mit 37,5 phr hocharomatischem Öl.

2.10 Mischung auf der Basis eines E-SBR-Kautschukes und eines Polyoctenylens

Der Kautschuk wird in der obengennannten Broschüre beschrieben und enthält 23% Styrol. Das Polyoctylen wird unter Ziffer 1.2 beschrieben.

| Gewichtsteile | Stoff |
|---|---|
| 80 | BUNA® EM 1500 |
| 20 | VESTENAMER® 8012 |
| 5 | Zinkoxid |
| 2 | Stearinsäure |
| 50 | Ruß CORAX® N220 |
| 10 | aromatisches Öl (Gulf el 3002 extract) |
| | Vulkanisationssystem S2 (siehe 2.6) |

2.11 Mischung auf der Basis eines Polybutadien-Kautschukes und eines Polyoctylens

Die beiden Komponenten werden unter 2.4 bzw. 1.2 beschrieben.

| Gewichtsteile | Stoff |
|---|---|
| 80 | BUNA® EM 1500 |
| 20 | VESTENAMER® 8012 |
| 3 | Zinkoxid |
| 2 | Stearinsäure |
| 60 | Ruß CORAX® N330 |
| 15 | naphthenisches Öl (GULFPAR 608) |
| 1,5 | Schwefel |
| 0,9 | Benzothiazyl-2-tert.-butylsulfenamid = TBBS (Bayer Vulkazit NZ) |

2.12 Mischung auf der Basis zweier Polybutadien-Kautschuke

Die Mischung unterscheidet sich von 2.11 durch den Einsatz von 50 Gewichtsteilen BUNA® CB 35 NF und 50 Gewichtsteilen BUNA® CB 10. (Herstellung mit Hilfe eines Co-Katalysators; cis-1,4-Gehalt: 96%).

2.13 Mischung auf der Basis eines Isopren-Kautschukes

Es wird ein synthetischer IR-Kautschuk der Fa. Goodyear verwendet. Dieser wird mit Hilfe von Titan-Katalysatoren in Lösung hergestellt. Der cis-Anteil beträgt 97%, die Mooney-Viskosität ($ML_{(1+4)}$ 100°C) 75 bis 95.

| Gewichtsteile | Stoff |
|---|---|
| 100 | NATSYN® 2200 |
| 1 | 2,2,4-Trimethyl-1,2-dihydrochinolin (Bayer VULKANOX® HS) TMO |
| 1,5 | N-Isopropyl-N'-phenyl-p-phenylendiamin = IPPD |
| 5 | Zinkoxid |
| 2,5 | Stearinsäure |
| 2,5 | Zn-Salze ungesättigter Carbonsäuren = AKTIPLAST (Rhein-Chemie, D-6800 Manheim) |
| 50 | Ruß CORAX® N550 |
| 5 | naphthenisches Öl (GULFPAR® 60P) |
| 3 | Schwefel |
| 1 | Benzothiazyl-2-sulfenmorpholid = MBS (Bayer Vulkazit MOZ) |
| 0,2 | Tetramethylthiurammonosulfid = TMTM (Bayer Vulkazit Thiuram MS) |

2.14 Mischung auf der Basis eines Isobutylen-Isopren-Kautschukes

Der Kautschuk ist nach Hofmann a.a.O. ein Mischpolymerisat aus Isobutylen und Isopren, das in Lösung polymerisiert wird. Nach Angabe der Herstellers beträgt der Ungesättigkeitsgrad 2 Mol-%: die Mooney-Viskosität $ML_{(1+8)}$ 100°C 41 bis 49.

| Gewichtsteile | Stoff |
|---|---|
| 100 | ESSO BUTYL® 365 |
| 1 | TMQ (siehe 2.14) |
| 1,5 | IPPD (siehe 2.14) |
| 5 | Zinkoxid |
| 1 | Stearinsäure |
| 50 | Ruß CORAX® N550 |
| 5 | naphthenisches Öl (GULFPAR 60P) |
| 2 | Schwefel |
| 1 | TMTD (siehe 2.6) |
| 0,5 | 2-Mercaptobenzothiazol = MBT (Bayer Vulkazit Mercapto) |

2.15 Mischung auf der Basis eines E-SBR- und eines Polybutadien-Kautschukes mit hohem cis-Gehalt

| Gewichtsteile | Stoffe |
|---|---|
| 25 | BUNA® EM 150 |
| 75 | BUNA® CB 10 |
| 5 | Zinkoxid |
| 2 | Stearinsäure |
| 50 | Ruß CORAX® N330 |
| 4 | naphthenisches Öl (GULFPAR® 60P) |
| 2 | Cumaronharz B1/65 Kw10 der Rütgerswerke, D-4100 Duisburg |
| 1,6 | Schwefel |
| 1,5 | CBS (seihe 2.6) |
| 0,1 | TMTM (siehe 2.13) |

2.16 Mischung auf der Basis eines E-SBR- und eines Polybutadienkautschukes mit niedrigem cis-Gehalt

Die Mischung unterscheidet sich von 2.15 durch den Einsatz von 75 Gewichtsteilen BUNA® CB 35.

2.17 Mischung auf der Basis eines E-SBR und eines Polyisoprenkautschukes mit niedriegem cis-Gehalt

Der IR-Kautschuk wird unter Verwendung von sterospezifischen Li-Katalysatoren in Hexan polymerisiert (Hofmann a.a.O.). Der cis-1,4-Anteil beträgt 92%, die Mooney-Viskosität $ML_{(1+4)}$ 100°C 55 bis 60. Die Mischung unterscheidet sich von 2.13 durch den Einsatz von 80 Gewichtsteilen Shell CARIFLEX® IR 305 und 20 Gewichtsteilen BUNA® EM 1502.

2.18 Mischung auf der Basis eines E-SBR- und zweier Isoprenkautschuke

Neben dem unter 2.13 beschriebenen IR-Kautschuk mit hohem cis-Gehalt wurde ein IR-Kautschuk mit 3,4-Anteil eingesetzt. Es handelt sich um ein Entwicklungsprodukt, das durch anionische Polymerisation mit Hilfe von Butyllithium in Hexan in Gegenwart eines Seitengruppenreglers (Dimethylether des Diethylenglykols) hergestellt wird. Der 3,4-Anteil beträgt 75 bis 80%, die Mooney-Viskositat etwa 80. Die Mischung unterscheidet sich von 2.13 durch den Einsatz von 40 Gewichtsteilen NATSYN® 2200, 40 Gewichtsteilen 3,4-IR und 20 Gewichtsteilen BUNA® EM 1502.

2.19 Mischung auf der Basis eines E-SBR-, eines Isopren- und eines Vinylpolybutadienkautschukes

Neben dem unter 2.13 beschriebenen hoch cis-haltigen IR-Kautschuk wurde ein BR-Kautschuk mit höherem 1,2-Gehalt eingesetzt. Es handelt sich um ein Produkt, das durch anionische Polymerisation in Gegenwart von Butyllithium und eines Reglers (vgl. A. F. Halasa et al. J. Polym. Science, Part A 1, Vol. 10 S. 1319—34, (1972)) in Hexan hergestellt wurde. Der 1,2-Gehalt beträgt 52%, die Mooney-Viskosität 50. Die Mischung unterscheidet sich von 2.13 durch den Einsatz von 40 Gewichsteilen NATSYN® 2200, 40 Gewichtsteilen 1,2-BR BUNA® VI 1949 und 20 Gewichtsteilen BUNA® EM 1502.

2.20 Mischung auf der Basis eines Naturkautschukes und eines E-SBR-Kautschukes

Es wurden geräucherte Felle ("smoked sheets") aus NR-Kautschuk eingesetzt, die auf einem Walzwerk mechanisch abgebaut ("mastiziert") worden waren. Ihre Defo-Härte betrug 1000.

| Gewichtsteile | Stoff |
|---|---|
| 75 | Sheets Defo 1000 |
| 25 | BUNA® EM 1500 |
| 5 | Zinkoxid |
| 2,5 | ANTIPLAST® (siehe 2.13) |
| 22 | Ruß CORAX® N330 |
| 3 | naphthenisches Öl |
| 2,5 | Schwefel |
| 0,5 | CBS (siehe 2.6) |
| 0,2 | TMTD (siehe 2.6) |

2.21 Mischung auf der Basis eines Naturkautschukes, eines hoch cis-haltigen Polybutadiens und eines E-SBR-Kautschukes

| Gewichtsteile | Stoff |
|---|---|
| 50 | Sheets Defo 1000 |
| 25 | BUNA® CB 10 |
| 25 | BUNA® EM 1500 |
| 3 | Zinkoxid |
| 2 | Stearinsäure |
| 22 | Ruß CORAX® N330 |
| 3 | naphthenisches Öl |
| 1,6 | Schwefel |
| 1,5 | CBS (siehe 2.6) |
| 0,1 | TMTM (siehe 2.13) |

2.22 Mischung auf der Basis eines Poly-2-chlorbutadiens, eines Acrylnitril-Butadien-Kautschukes und eines E-SBR-Kautschukes

Es wurde ein CR-Emulsions-Polymerisat mit einer Mooney-Viskosität $ML_{(1+4)}$ 100°C von 40 bis 45 und ein NBR-Emulsionspolymerisat mit einer Mooney-Viskosität von 30 + 5 und einem Acrylnitril-Gehalt von 34% eingesetzt (siehe Druckschrift der Fa. Bayer "Bayerprodukte für die Gummiindustrie", Best.-Nr. KA 32125 Ausgabe 07/81). Als Verarbeitungshilfsmittel wurden ein Polyoctenylen mit 60% trans-Gehalt und ein Polybutadien eingesetzt.

| Gewichtsteile | Stoff |
|---|---|
| 40 | CR (BAYPREN® 210) |
| 25 | NBR (PERBUNAN® N3302 NS) |
| 25 | BUNA® EN 1507 |
| 5 | VESTENAMER® 6213 |
| 5 | BUNA® CB 10 |
| 1 | Diphenylamin-Derivat = DDA (Bayer VULKANOX®) |
| 30 | Ruß CORAX® N550 |
| 10 | naphthenisches Öl |
| 5 | Zinkoxid |
| 2 | Magnesiumoxid |
| 1 | Schwefel |
| 1,2 | TMD (siehe 2.6) |
| 0,2 | 2-Mercaptoimidazolin = ETU (Bayer Vulkazit MPV/C) |

2.23 Mischung auf der Basis eines Poly-2-chlorbutadiens und eines E-SBR-Kautschukes

Die Mischung unterscheidet sich von 2.22 durch den Einsatz von 45 Gewichtsteilen CR (siehe 2.22) und 45 Gewichtsteilen BUNA® EM 1507.

2.24 Mischung auf der Basis eines Acrylnitril-Butadien-Kautschukes und eines E-SBR-Kautschukes

| Gewichtsteile | Stoff |
|---|---|
| 25 | NBR (siehe 2.22.) |
| 75 | BUNA® EM 1507 |
| 5 | Zinkoxid |
| 1 | Stearinsäure |
| 50 | Ruß CORAX® N550 |
| 20 | Methylen-bis-thioglykolsäurebutylester (Bayer VULKANOL® 88) |
| 0,25 | Schwefel |
| 2,5 | TMTD (siehe 2.6) |
| 1,5 | Dibenzothiazyldisulfid = MBTS (Bayer Vulkazit DM) |

3. Die Covulkanisation

3.1 Durch Spritzgießen nach dem zweistufigen Verfahren

In einem Werkzeug mit zentralem Stangenanguß stellt man durch Spritzgießen Scheiben mit einem Durchmesser von 200 mm und einer Dicke von 3 mm aus den Werkstoffen 1.1 bis 1.6 her. Die Covulkanisation wird im gleichen Werkzeug ausgeführt, nachdem die Kavität auf 6 mm geöffnet und jeweils ein Spritzling aus einem PPE-Werkstoff eingelegt ist. Einige Spritzlinge erwärmt man für die angegebenen Zeit in der heißen Form, bevor der Kautschuk eingespritzt wird. Dies und die gewählten Covulkanisationsbedingungen für die jeweilig verwendeten Kautschukmischungen sind in den nachfolgenden Tabellen angegeben.

Die Bestimmung der Trennkräfte für die Elastomer-Thermoplast-Bindung erfolgt in Anlehnung an DIN

53 531 und 53 539 mit dem Unterschied, daß die Breite des Probestreifens 30 statt 25 mm beträgt und eine Abzugsgeschwindigkeit von 100 statt 50 mm/min verwendet wird.

3.2 Durch Pressen nach dem zweistufigen Verfahren
Vorgefertigte Platten aus den PPE-Werkstoffen werden mit einem Kautschukfell belegt und innerhalb von 2 min bei 180°C gepreßt.

Tabelle 1

Verbundfestigkeiten zwischen im Spitzgußverfahren covulkanisierten PPE-Werkstoffen und füllstoff- und weichmacherhaltigem E-SBR-Kautschuk

| Beisp. Nr. | Kautschuk | PPE-Werkstoff | Werkzeugtemp. (°C) | Vorwärmzeit (s) | Covulkanis.-zeit (s) | Haftkraft (N) | Trennkraft (N/mm) | Trennart* |
|---|---|---|---|---|---|---|---|---|
| 3.1.1 | 2.1 | 1.1 | 160 | 0 | 150 | 365 | 12,2 | c |
| 3.1.2 | 2.1 | 1.1 | 160 | 180 | 150 | 325 | 10,8 | c |
| 3.1.3 | 2.1 | 1.1 | 160 | 0 | 300 | 365 | 12,2 | c |
| 3.1.4 | 2.1 | 1.1 | 160 | 180 | 300 | 295 | 9,8 | c |
| 3.1.5 | 2.1 | 1.2 | 160 | 0 | 150 | 355 | 11,8 | c |
| 3.1.6 | 2.1 | 1.2 | 160 | 0 | 300 | 335 | 11,2 | c |
| 3.1.7 | 2.2 | 1.2 | 180 | 0 | 150 | 330 | 11,0 | a |
| 3.1.8 | 2.2 | 1.2 | 180 | 0 | 300 | 275 | 9,2 | a |
| 3.1.9 | 2.1 | 1.3 | 160 | 0 | 150 | 188 | 6,3 | a |
| 3.1.10 | 2.1 | 1.3 | 160 | 0 | 300 | 186 | 6,2 | a |
| 3.1.11 | 2.1 | 1.3 | 180 | 0 | 150 | 154 | 5,1 | a |
| 3.1.12 | 2.1 | 1.3 | 180 | 0 | 300 | 158 | 5,3 | a |
| 3.1.13 | 2.1 | 1.4 | 160 | 0 | 150 | 86 | 2,9 | a |
| 3.1.14 | 2.1 | 1.4 | 160 | 0 | 300 | 82 | 2,7 | a |
| 3.1.15 | 2.1 | 1.5 | 160 | 0 | 150 | 85 | 2,8 | a |
| 3.1.16 | 2.1 | 1.5 | 160 | 180 | 150 | 65 | 2,2 | a |
| 3.1.17 | 2.1 | 1.6 | 160 | 0 | 150 | 60 | 2,0 | a |
| 3.1.18 | 2.1 | 1.6 | 160 | 180 | 150 | 76 | 2,5 | a |

* Trennart: c (cohäsiv): Trennung erfolgte im Elastomeren
a (adhäsiv): Trennung erfolgte zwischen Elastomeren und PPE-Werkstoff

Tabelle 2

Vulkanisationsbedingungen und Verbundfestigkeiten bei dem durch Pressen erzeugten Verbund zwischen PPE-Werkstoffen und Kautschuken

| Beisp. Nr. | Kautschuk | PPE-Werkstoff | Vulkanis.-mittel | Vulkanis.-temp. (°C) | Vulkanis.-zeit (min) | Füllstoff | Haftkraft (N) | Trennkraft (N/mm) | Trennart |
|---|---|---|---|---|---|---|---|---|---|
| 3.2.1 | 2.2 | 1.1 | S1 | 180 | 3 | Ruß | 108 | 3,6 | a |
| 3.2.2 | 2.2 | 1.2 | S1 | 180 | 3 | Ruß | 104 | 3,5 | a |
| A | 2.3 | 1.1 | P2 | 85 | 360 | Ruß | 40 | 1,3 | c |
| B | 2.4 | 1.1 | S2 | 65 | 540 | - | n.m. | - | c |
| C | 2.5 | 1.1 | S2 | 65 | 540 | Ruß | n.m. | - | c |
| D | 2.4 | 1.1 | P1 | 150 | 120 | - | n.m. | - | c |
| E | 2.5 | 1.1 | P1 | 150 | 120 | Ruß | 28 | 0,9 | a |
| F | 2.4 | 1.1 | P2 | 85 | 300 | - | n.m. | - | c |
| G | 2.5 | 1.1 | P2 | 85 | 300 | Ruß | 16 | 0,5 | a |

Erläuterungen

1. Die Vulkanisationssysteme wurden wie folgt abgekürzt:
   S1 = Schwefel, N-Cyclohexyl-1-benzothiasulfenamid, Tetramethylthiuramdisulfid
   S2 = Schwefel, Zink-N-diethyldithiocarbamat, Dibenzothiazyldisulfid
   P1 = Dicumylperoxid
   P2 = Lauroylperoxid
2. n.m. = nicht meßbar
3. a = adhäsiv
   c = cohäsiv

Tabelle 3

| Beispiel Nr. | Kautschuk-mischung | Covulkanisationszeit (min) | Haft-kraft (N) | Trenn-kraft (N/mm) | Trenn-art |
|---|---|---|---|---|---|
| 3.3.1 | 2.6 | 4 | 990 | 33,0 | c |
| 3.3.2 | 2.7 | 4 | 313 | 10,4 | c |
| 3.3.3 | 2.8 | 4 | 365 | 12,2 | c |
| 3.3.4 | 2.9 | 4 | 315 | 10,5 | c |
| 3.3.5 | 2.10 | 4 | 330 | 11,0 | (c) |
| 3.3.6 | 2.11 | 6 | 124 | 4,1 | c |
| 3.3.7 | 2.12 | 6 | 127 | 4,2 | c |
| 3.3.8 | 2.13 | 4 | 300 | 10,0 | c |
| 3.3.9 | 2.14 | 4 | 105 | 3,5 | (c) |
| 3.3.10 | 2,15 | 4 | 415 | 13,8 | c |
| 3.3.11 | 2.16 | 4 | 350 | 11,7 | c |
| 3.3.12 | 2.17 | 4 | 215 | 7,2 | c |
| 3.3.13 | 2.18 | 4 | 185 | 6,2 | c |
| 3.3.14 | 2.19 | 4 | 145 | 4,8 | c |
| 3.3.15 | 2.20 | 4 | 200 | 6,7 | c |
| 3.3.16 | 2.21 | 5 | 300 | 10,0 | c |
| 3.3.17 | 2.22 | 4 | 250 | 8,3 | c |
| 3.3.18 | 2.23 | 4 | 213 | 7,1 | c |
| 3.3.19 | 2.24 | 4 | 102 | 3,4 | a |

PPE-Werkstoff: Beispiel 2.10 siehe 1.2, sonst siehe 1.1
Werkzeugtemperatur: 180 °C
Vorwärmzeit: keine
c: cohäsiv
(c): Delaminierung des PPE-Werkstoffs
a: adhäsiv

Abbildung 1 zeigt, daß der erfindungsgemäße Verbund (nach Beispiel 3.2.2) eine erheblich größere Höchstkraft (N) aufweist als das Vergleichssystem nach Runge und Dreyfuss (Beispiel G). Als Vergleichsmaßstab eignet sich nicht die von diesen Autoren angegebene Adhäsionsarbeit, weil damit das Deformations- und Festigkeitsverhalten des Elastomeren unberücksichtigt bleibt, sondern lediglich die auf die Probendimension bezogene Trennkraft.

**Patentansprüche**

1. Verfahren zur Herstellung eines Verbundes zwischen polyphenylenetherhaltigen Formmassen und synthetischen Kautschuken, wobei die polyphenylenetherhaltigen Formmassen folgende Zusammensetzung haben:

a) 100 Masseteile Polymere von ortho-substituierten Phenolen der allgemeinen Formel

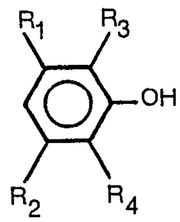

wobei $R_1$ und $R_2$ unabhängig voneinander für eine Methylgruppe oder Wasserstoff stehen und $R_3$ und $R_4$ entweder eine n-Alkylgruppe mit bis zu 6 C-Atomen bedeuten oder $R_3$ Wasserstoff ist und $R_4$ für einen tertiären Alkylrest mit bis zu 6 C-Atomen steht,

b) 0 bis 20 Masseteile Polyalkenylene,

c) 0 bis 100 Masseteile Styrolpolymerisate,

d) gegebenenfalls weitere Zusatzstoffe

und folgende Kautschuke verwendet werden:

1. SBR-Kautschuk
2. BR-Kautschuk
3. IR-Kautschuk
4. IIR-Kautschuke
5. Mischungen der Kautschuke 1. — 4. untereinander
6. Kautschuke gemäß 1. — 5., wobei bis zu 80 Gewichtsprozent durch CIIR-Kautschuk, bis zu 95 Gewichtsprozent durch NR-Kautschuk, bis zu 60 Gewichtsprozent durch CR-Kautschuk oder bis zu 25 Gewichtsprozent durch NBR-Kautschuk ersetzt sind, die Füllstoffe, Weichmacher sowie ein Vulkanisationsystem enthalten, wobei man den Verbund durch Covulkanisation herstellt, ein Vulkanisationsystem auf Basis von Schwefel und einem oder mehreren Vulkanisationsbeschleunigern verwendet und die Covulkanisation bei Werkzeugtemperaturen zwischen 140 und 200°C durchführt.

2. Verfahren nach Anspruch 1, dadurch gekennzeichnet, daß der Kautschuk Stearinsäure, Zinkoxid, Füllstoffe und Weichmacheröle enthält.

3. Verfahren nach den Ansprüchen 1 oder 2, dadurch gekennzeichnet, daß das Vulkanisationssystem schwefelhaltige Verbindungen enthält.

4. Verfahren nach den Ansprüchen 1 bis 3, dadurch gekennzeichnet, daß als Vulkanisationsbeschleuniger Verbindungen aus der Reihe N-Cyclohexyl-1-benzothiazolsulfenamid, Tetramethylthiuramdisulfid, Diphenylguanidin, Zinkdiethyldithiocarbamat, Dibenzothiazyldisulfid, Benzothiazyl-2-tert.-butylsulfenamid, Benzothiazyl-2-sulfenmorpholid, Tetramethylthiurammonosulfid, 2-Mercaptobenzothiazol und/oder 2-Mercaptoimidazolin ausgewählt werden.

5. Verfahren nach den Ansprüchen 1 bis 4, dadurch gekennzeichnet, daß der Kautschuk zusätzlich Polyoctenylen enthält.

6. Verfahren nach den Ansprüchen 1 bis 5, dadurch gekennzeichnet, daß man die Covulkanisation in 30 Sekunden bis 10 Minuten, vorzugsweise bei 150 bis 180°C in 90 bis 300 Sekunden durchführt.

7. Verfahren nach den Ansprüchen 1 bis 6, dadurch gekennzeichnet, daß die Massetemperatur der Kautschukmischung bei Beginn der Covulkanisation 40 bis 80°C, vorzugsweise 60 bis 75°C, beträgt.

8. Verfahren nach den Ansprüchen 1 bis 7, dadurch gekennzeichnet, daß $R_1$ und $R_2$ Wasserstoff bedeuten und $R_3$ und $R_4$ jeweils für den Methylrest stehen.

9. Verfahren nach den Ansprüchen 1 bis 8, dadurch gekennzeichnet, daß man als Komponente b) der Formmassen 5 bis 15 Masseteile Polyalkenylene, vorzugsweise Polyoctenylene, einsetzt.

10. Verfahren nach den Ansprüchen 1 bis 9, dadurch gekennzeichnet, daß man als Komponente c) der Formmassen 5 bis 100 Masseteile schlagzähes Styrolpolymerisat einsetzt.

11. Verfahren nach den Ansprüchen 1 bis 10, dadurch gekennzeichnet, daß man, bezogen auf 100 Teile Kautschuk, weniger als drei Teile Beschleuniger einsetzt.

12. Verfahren nach den Ansprüchen 1 bis 11, dadurch gekennzeichnet, daß man den Verbund nach dem ein- oder zweistufigen Spritzgießverfahren herstellt.

13. Verfahren nach den Ansprüchen 1 bis 12, dadurch gekennzeichnet, daß man einen SBR- und/oder BR-Kautschuk einsetzt.

14. Verfahren nach den Anspruch 13, dadurch gekennzeichnet, daß man einen pulverförmigen E-SBR-Kautschuk einsetzt.

15. Verfahren nach den Ansprüchen 1 bis 12, dadurch gekennzeichnet, daß man ein NR/SBR- oder NR/BR/SBR-Kautschukgemisch einsetzt, wobei der Anteil des NR-Kautschukes zwischen 50 und 95 Gewichtsprozent beträgt.

16. Verfahren nach den Ansprüchen 1 bis 12, dadurch gekennzeichnet, daß man ein CR/SBR/NBR-Kautschukgemisch einsetzt, wobei der Anteil des CR-Kautschuks bis zu 40 Gewichtsprozent beträgt und der Anteil des NBR-Kautschukes unter 25 Gewichtsprozent liegt.

17. Verfahren nach den Ansprüchen 1 bis 12, dadurch gekennzeichnet, daß man ein CR/SBR-Kautschukgemisch einsetzt, wobei der Anteil des CR-Kautschukes bis zu 45 Gewichtsprozent beträgt.

18. Covulkanisate, erhalten nach den Ansprüchen 1 bis 17.

**Revendications**

1. Procédé de réalisation d'une liaison entre des masses à mouler, renfermant des éthers polyphényléniques, et des caoutchoucs synthétiques, les masses à mouler qui renferment des éthers polyphényléniques ayant la composition suivante:

a) 100 parties en masse de polymères de phénols ortho-substitués de la formule générale

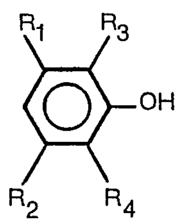

dans laquele $R_1$ et $R_2$, indépendamment l'un de l'autre, représentent un groupe méthyle ou de l'hydrogène, et $R_3$ et $R_4$ représentent un groupe n-alkyle comportant jusqu'à 6 atomes de carbone, ou bien $R_3$ est de l'hydrogène et $R_4$ est un radical alkyle tertiaire comportant jusqu'à 6 atomes de carbone,

b) de zéro à 20 parties en masse de poly-alkénylènes,

c) de zéro à 100 parties en masse de produits de polymérisation du styrène,

d) éventuellement d'autres additifs,

les caoutchoucs suivants étant utilisés:

1. Caoutchouc SBR
2. Caoutchouc BR
3. Caoutchouc IR
4. Caoutchoucs IIR
5. Mélange mutuel des caoutchoucs 1 à 4.
6. Coutchoucs selon 1 à 5, jusqu'à 80% en poids étant remplacés par du caoutchouc CIIR, jusqu'à 95% en poids étant remplacés par du caoutchouc NR, jusqu'à 60% en poids étant remplacés par du caoutchouc CR, ou jusqu'à 25% en poids étant remplacés par du caoutchouc NBR,

ceux-ci renfermant des charges, des plastifiants, ainsi qu'un système de vulcanisation, tandis qu'on réalise la liaison par covulcanisation, que l'on utilise un système de vulcanisation à base de soufre et d'un ou plusieurs accélérateurs de vulcanisation et que l'on effectue la covulcanisation à des températures d'outil comprises entre 140 et 200°C.

2. Procédé selon la revendication 1, caractérisé par le fait que le caouchouc renferme de l'acide stéarique, de l'oxyde de zinc, des charges et des huiles plastifiantes.

3. Procédé selon les revendications 1 ou 2, caractérisé par le fait que le système de vulcanisation renferme des composés contenant du soufre.

4. Procédé selon les revendications 1 à 3, caractérisé par le fait que, comme accélérateurs de vulcanisation, on choisit des composés de la série de la N-cyclohexyl-1-benzothiazole-sulfénamide, du bisulfure de tétraméthyl-thiurame, de la diphényl-guanidine, du dithiocarbamate de zinc-diéthyle, du bisulfure de dibenzothiazyle, de la benzothiazyl-2-tert.-butyl-sulfénamide, du benzothiazyl-2-sulfène-morpholide, du monosulfure de tétraméthyl-thiurame, du 2-mercapto-benzothiazole et/ou de la 2-mercapto-imidazoline.

5. Procédé selon les revendications 1 à 4, caractérisé par le fait que le caoutchouc renferme en plus du poly-octénylène.

6. Procédé selon les revendications 1 à 5, caractérisé par le fait que l'on effectue la co-vulcanisation en 30 secondes à 10 minutes, de préference à une température de 150 à 180°C en 90 à 300 secondes.

7. Procédé selon les revendications 1 à 6, caractérisé par le fait que la température de masse du mélange caoutchouteux est au début de la co-vulcanisation de 40 à 80°C, de préference de 60 à 75°C.

8. Procédé selon les revendications 1 à 7, caractérisé par le fait que $R_1$ et $R_2$ représentent de l'hydrogène et $R_3$ et $R_4$ sont chaque fois mis pour le reste méthyle.

9. Procédé selon les revendications 1 à 8, caractérisé par le fait que l'on utilise, comme composant b) des masses à mouler, de 5 à 15 parties en masse de polyalkénylènes, de préference de poly-octénylènes.

10. Procédé selon les revendications 1 à 9, caractérisé par le fait que l'on utilise, comme composant c) des masses à mouler, de 5 à 100 parties en masse d'un produit de polymérisation du styrène résistant au choc.

11. Procédé selon les revendications 1 à 10, caractérisé par le fait que l'on utilise, relativement à 100 parties de caoutchouc, moins de trois parties d'accélérateur.

12. Procédé selon les revendications 1 à 11, caractérisé par le fait que l'on réalise la liaison selon le procédé de coulée par injection en un ou deux stades.

13. Procédé selon les revendications 1 à 12, caractérisé par le fait que l'on utilise un caoutchouc SBR et/ou un caoutchouc BR.

14. Procédé selon la revendication 13, caractérisé par le fait que l'on utilise un caoutchouc E-SBR en poudre.

15. Procédé selon les revendications 1 à 12, caractérisé par le fait que l'on utilise un mélange de caoutchouc NR/SBR ou NR/BR/SBR, la fraction du caoutchouc NR étant comprise entre 50 et 95% en poids.

16. Procédé selon les revendications 1 à 12, caractérisé par le fait que l'on utilise un mélange de caoutchouc CR/SBR/NBR, la fraction du caoutchouc CR atteignant jusqu'à 40% en poids et la fraction du caoutchouc NBR se situant au-dessous de 25% en poids.

17. Procédé selon les revendications 1 à 12, caractérisé par le fait que l'on utilise un mélange de caoutchouc CR/SBR, la fraction du caoutchouc CR atteignant jusqu'à 45% en poids.

18. Les co-vulcanisats obtenus selon les revendications 1 à 17.

**Claims**

1. A process for producing a bond between polyphenylene ether-containing moulding compositions and synthetic rubbers, the polyphenylene ether-containing moulding compositions having the following constituents:

a) 100 parts by weight of polymers of ortho-substituted phenols of the general formula

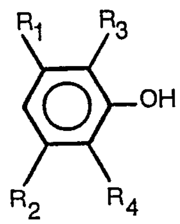

in which $R_1$ and $R_2$, independently of one another, represent a methyl group or hydrogen and $R_3$ and $R_4$ either denote an n-alkyl group having up to 6 carbon atoms or $R_3$ is hydrogen and $R_4$ represents a tertiary alkyl radical having up to 6 carbon atoms,

b) 0 to 20 parts by weight of polyalkenylenes,

c) 0 to 100 parts by weight of styrene polymers,

d) if desired, other additives

and the following rubbers are used:

1) SBR rubber

2) BR rubber

3) IR rubber

4) IIR rubbers

5) Mixtures of the rubbers 1)—4) with each other

6) Rubbers according to 1)—5), up to 80 percent by weight being replaced by CIIR rubber, up to 95 percent by weight being replaced by NR rubber, up to 60 percent by weight being replaced by CR rubber or up to 25 percent by weight being replaced by NBR rubber,

which rubbers contain fillers, plasticizers and also a vulcanizing system, the bond being produced by covulcanization, a vulcanizing system based on sulphur and one or more vulcanization accelerators being used and the covulcanization being carried out at mould temperatures of between 140 and 200°C.

2. A process according to claim 1, characterized in that the rubber contains stearic acid, zinc oxide, fillers and plasticizer oils.

3. A process according to either of claims 1 and 2, characterized in that the vulcanizing system contains sulphur-containing compounds.

4. A process according to any of claims 1 to 3, characterized in that the vulcanization accelerators selected are compounds from the series comprising N-cyclohexyl-1-benzothiazolesulphenamide, tetramethylthiuram disulphide, diphenylguanidine, zinc diethyldithiocarbamate, dibenzothiazyl disulphide, benzothiazyl-2-tert-butylsulphenamide, benzothiazyl-2-sulphenemorpholide, tetramethylthiuram monosulphide, 2-mercaptobenzothiazole and/or 2-mercaptoimidazoline.

5. A process according to any of claims 1 to 4, characterized in that the rubber additionally contains polyoctenylene.

6. A process according to any of claims 1 to 5, characterized in that the covulcanization is carried out in 30 seconds to 10 minutes, preferably at 150 to 180°C in 90 to 300 seconds.

7. A process according to any of claims 1 to 6, characterized in that the material temperature of the rubber mixture at the beginning of the covulcanization is 40 to 80°C, preferably 60 to 75°C.

8. A process according to any of claims 1 to 7, characterized in that $R_1$ and $R_2$ denote hydrogen and $R_3$ and $R_4$ each represent the methyl radical.

9. A process according to any of claims 1 to 8, characterized in that the component b) of the moulding compositions is 5 to 15 parts by weight of polyalkylenes, preferably polyoctenylenes.

10. A process according to any of claims 1 to 9, characterized in that the component c) of the moulding compositions is 5 to 100 parts by weight of impact resistant styrene polymer.

11. A process according to any of claims 1 to 10, characterized in that less than three parts of accelerator are used per 100 parts of rubber.

12. A process according to any of claims 1 and 11, characterized in that the bond is produced by the single stage or two stage injection moulding process.

13. A process according to any of claims 1 to 12, characterized in that an SBR rubber and/or BR rubber is used.

14. A process according to claim 13, characterized in that a pulverulent E-SBR rubber is used.

15. A process according to any of claims 1 to 12, characterized in that an NR/SBR or NR/BR/SBR rubber mix is used, the proportion of NR rubber being between 50 and 95 percent by weight.

16. A process according to any of claims 1 to 12, characterized in that a CR/SBR/NBR rubber mix is used, the proportion of CR rubber being up to 40 percent by weight and the proportion of NBR rubber being below 25 percent by weight.

17. A process according to any of claims 1 to 12, characterized in that a CR/SBR rubber mix is used, the proportion of CR rubber being up to 45 percent by weight.

18. A covulcanizate, obtained according to any of claims 1 to 17.

Abbildung 1

Trennversuch an Thermoplast-Elastomer-Verbunden nach DIN 53 531 T 1, Abhängigkeit der Höchstkraft (in Newton) vom Weg der sich bewegenden Probenklemme (in mm)

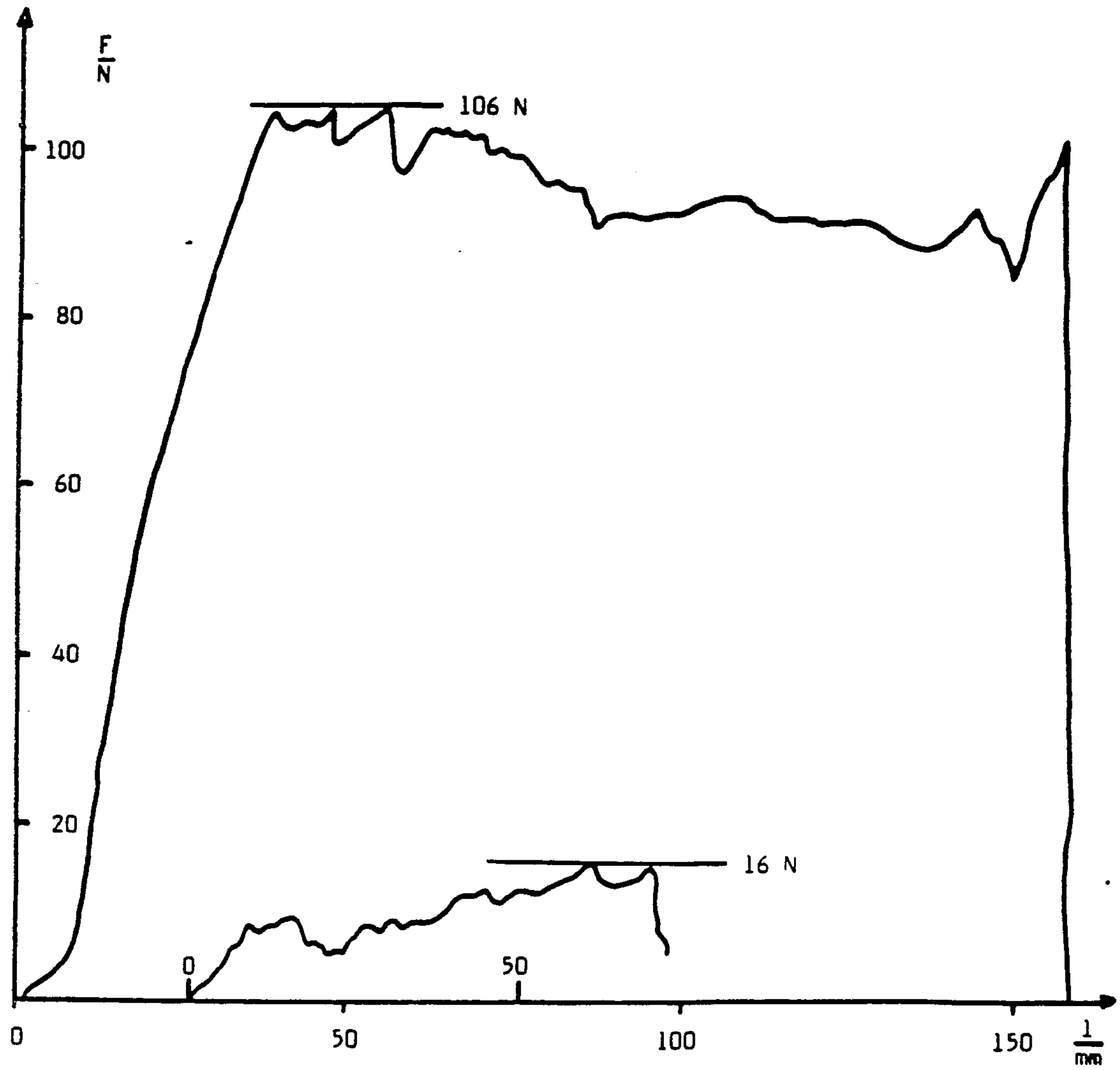


Versuchsbedingungen:

Abzugsgeschwindigkeit: 100 mm/min — Raumklima 23 °C/50 % rF

Probenabmessungen : l 100 mm b 30 mm $h_1$ (Thermoplast) 4 mm

$h_2$ (Elastomer) 2 mm